# EUROPÄISCHE PATENTSCHRIFT

(11) **EP 2 594 725 B1**
(45) Veröffentlichungstag und Bekanntmachung des Hinweises auf die Patenterteilung: **02.08.2017**
(21) Anmeldenummer: 12192986.3
(22) Anmeldetag: 16.11.2012
(51) Int. Cl.: E06B 7/10

(54) **Fenster**
Window
Fenêtre

(30) Priorität: 18.11.2011 AT 17182011
(43) Veröffentlichungstag der Anmeldung: 22.05.2013
(73) Patentinhaber: IFN-Holding AG, 4050 Traun (AT)
(72) Erfinder: Hochreiter, Herbert, 4048 Puchenau (AT)
(74) Vertreter: Burger, Hannes

(56) Entgegenhaltungen:
- EP-A1- 1 640 552
- DE-C1- 19 938 430
- DE-U1- 8 337 249

## Beschreibung

Die Erfindung betrifft ein Fenster oder eine Tür umfassend einen Blendrahmen und einen Flügelrahmen, wobei für die Zufuhr von Frischluft der Blendrahmen oder der Flügelrahmen zumindest eine Lufteintrittsöffnung in einer ersten, äußeren, durch eine erste Profilwand gebildete Oberfläche und zumindest eine Luftaustrittsöffnung in einer zweiten, inneren, durch eine zweite Profilwand gebildete Oberfläche aufweist, die durch zumindest einen Luftführungskanal im Blendrahmen oder im Flügelrahmen strömungsverbunden sind, und für die Abfuhr von Raumluft der Blendrahmen oder der Flügelrahmen in der zweiten Profilwand Lufteintrittsöffnungen und in der ersten Profilwand Luftaustrittsöffnungen zum Ableiten der Raumluft in die Umgebungsatmosphäre aufweist, die durch zumindest einen weiteren Luftführungskanal im Blendrahmen oder im Flügelrahmen strömungsverbunden sind, sodass für die Zuluft und für die Abluft jeweils ein eigener Luftführungskanal angeordnet ist, wobei ein Teilstück des Luftführungskanals unmittelbar anschließend an die zweite Profilwand ausgebildet ist, wobei dieses Teilstück eine Länge in Richtung der Längserstreckung der Profilwand aufweist, die zumindest 10 % der Länge der zweiten Profilwand in dieser Richtung beträgt.

Aus Umweltschutzgründen werden Gebäude vermehrt im Passivhausstil errichtet. Damit verbunden sind Systeme zur Raumlüftung, die üblicherweise in Nebenräumen untergebracht werden. Auch bei Gebäuden die nicht dem Passivhausstandard entsprechen rückt die Räumlüftung verstärkt in den Vordergrund der Betrachtung, da moderne Fenster in Hinblick auf den Luftaustausch "zu dicht" sind und auf eine herkömmliche Raumlüftung durch Öffnen eines Fensters häufig vergessen wird bzw. diese nicht im ausreichendem Maße erfolgt. Die Folgen davon sind Schimmelbildung bzw. eine unter Umständen belastete Raumluft.

Aus der DE 83 37 249 U1 ist ein Fenster bekannt, bei dem der Fensterrahmen und/oder der Profilrahmen als Wärmetauscher-Lüfter verwendet wird bzw. werden. Die Profile der Rahmen sind als Hohlkammerprofile mit zwei hintereinanderliegenden Hohlkammern ausgebildet. Die Frischluft strömt in die äußere Hohlkammer ein, strömt danach über den Umfang des Rahmens und tritt über eine entsprechende Öffnung in den Raum ein. Die Raumluft wird ebenfalls über zumindest annähernd den gesamten Umfang geleitet, wobei die Raumluft in der raumseitigen Hohlkammer strömt.

Aus der DE 198 13 119 A1 ist ein Turbulenzwärmerückgewinner bekannt, der unter anderem am oberen, waagrechten Teil des Fensterrahmens angeordnet sein kann. Die Frischluft wird dabei über die Hohlkammern der darunter liegenden senkrechten Profile des Fensterrahmens angesaugt. Die Raumluftansaugung erfolgt in Höhe des Turbulenzwärmerückgewinners. Gemäß einer Variante dazu kann die Frischluftansaugung über gesonderte senkrechte Profile, insbesondere Rollladenprofile, erfolgen, die auf dem Fensterrahmen außenseitig montiert sind. Als Varianten dazu wird der Einbau des Turbulenzwärmerückgewinners in bzw. unter einem Fensterbrett sowie in einem Rollladenkasten genannt.

Die EP 1 862 746 A2 beschreibt eine Lüftungseinrichtung in Form einer Einschubkassette zum Einbau in einen Fensterrahmen aus Mehrkammerhohlprofilen. Die Luft umströmt dabei den gesamten Rahmen. Der Einbau erfolgt raumseitig in das Profil. Wie die Raumluft und die Frischluft den Fensterrahmen durchströmen, geht aus dieser EP 1 862 746 A2 nicht hervor.

Die Aufgabe der Erfindung ist es ein bezüglich Luftverteilung verbessertes System zur Raumlüftung zu schaffen.

Diese Aufgabe wird mit dem eingangs genannten Fenster bzw. der eingangs genannten Tür gelöst, bei dem bzw. bei der in der zweiten Profilwand zwischen vier und dreißig Luftaustrittsöffhungen für die Frischluft angeordnet sind.

Von Vorteil ist dabei, dass, nachdem die zweite Profilwand jene ist, die dem Raum zugewandt ist, die von außen eintretende Luft durch die raumseitige Profilkammer bereits sehr nahe an die Raumtemperatur angepasst wird, insbesondere da sich diese Kammer über zumindest 10 % der Länge der Profilwand erstreckt, wodurch Zugerscheinungen deutlich reduziert werden. Von Vorteil ist dabei weiters, dass die von außen eintretende Frischluft bereits durch die ausströmende Luft und/oder das Profil vorgewärmt wird, wodurch die Vereisungsgefahr im Winter deutlich reduziert werden kann.

Höhere Luftaustauschmengen und/oder eine Reduzierung der Querschnitte der Lufteintritts-und der Luftaustrittsöffnungen können erreicht werden, wenn sowohl im Blendrahmen als auch im Flügelrahmen zumindest eine Lufteintrittsöffiiung, zumindest eine Luftaustrittsöffnung und zumindest ein Luftführungskanal angeordnet sind.

Bevorzugt ist bzw. sind der Blendrahmen und/oder der Flügelrahmen durch ein Hohlkammerprofil mit mehreren, insbesondere zumindest drei, Hohlkammern gebildet, sodass keine zusätzliche Ausbildung der Strömungskanäle im Profil erforderlich ist. Es kann also auf eine bereits bestehende Struktur zurückgegriffen werden, sodass derartige Fenster auch nachträglich mit dem Lüftungssystem ausgerüstet werden können.

Gemäß einer anderen Ausführungsvariante ist vorgesehen, dass mehrere Lufteintrittsöffnungen angeordnet sind, wobei diese mehreren Lufteintrittsöffnungen in Summe eine Querschnittsfläche zwischen 1 cm² und 30 cm², insbesondere zwischen 3 cm² und 20 cm², vorzugsweise 15 cm², aufweisen. Die Lufteintrittsöffnungen sind also über einen relativ großen Bereich des Profils angeordnet, wobei zudem ein relativ großer Gesamtquerschnitt der Lufteintrittsöffnungen zur Verfügung gestellt werden kann, sodass die Strömungsgeschwindigkeit der Luft und damit Zugerscheinungen reduziert werden können. Darüber hinaus ist damit auch eine bessere Vermischung mit der Raumluft erreichbar.

Es ist aber auch möglich, dass nur eine Lüftungsöffnung angeordnet ist, die eine Querschnittsfläche zwischen 1 cm² und 30 cm², insbesondere zwischen 3 cm² und 20 cm², vorzugsweise 15 cm², aufweist.

Dieser Effekt wird noch verbessert, wenn der Blendrahmen und der Flügelrahmen aus mehreren Profilelementen zusammengesetzt sind, wobei die Lufteintrittsöffnung(en) und/oder die Luftaustrittsöffnung(en) in zumindest zwei Profilelementen angeordnet sind, wobei bei dieser Ausführungsvariante zusätzlich sowohl eine vertikal als auch eine horizontal orientierte Einströmung der Luft ermöglicht wird, wodurch die Vermischung mit der Raumluft effektiver erfolgen kann.

Nach einer anderen Ausführungsvariante kann vorgesehen sein, dass ein weiterer Luftführungskanal zumindest teilweise unmittelbar anschließend an die erste Profilwand und teilweise im Bereich von Entwässerungsöffnungen des Blendrahmens oder des Flügelrahmens ausgebildet ist. Es wird damit möglich, entstehendes Kondenswasser, das aufgrund der Abkühlung der Raumluft während des Weges durch das Profil entsteht, über die bereits bei derartigen Profilen ohnehin vorhandenen Entwässerungsöffnungen abführen zu können, sodass hierfür keine zusätzlichen Entwässerungsöffnungen erforderlich sind.

Es ist auch möglich, eine motorisch betriebene Lüftereinheit mit dem Luftführungskanal oder den Luftführungskanälen strömungsverbunden vorzusehen, wodurch die Steuerung der Luftmengen, die ausgetauscht werden sollen, verbessert werden kann. Zudem kann damit die rein thermisch bedingte Zirkulation unterstützt werden, sodass der Luftaustausch auch bei geringen Temperaturgefällen zwischen der Raumluft und der Außenluft verbessert werden kann.

Vorzugsweise sind dabei die Lüftereinheit und gegebenenfalls das Bedienelement zumindest teilweise in einem Falz zwischen dem Flügelrahmen und dem Blendrahmen angeordnet bzw. in diesen integriert, sind diese also keine Anbauteile, wie sie aus dem Stand der Technik bekannt sind. Es ist damit keine zusätzliche Wandfläche zur Anordnung der Lüftereinheit erforderlich. Zudem können die Bedienung und die Revision der Lüftereinheit ausschließlich über den Falz erfolgen. Indem die Bedienung ausschließlich über den Falz erfolgen kann, wird diese bei geschlossenem Fenster oder geschlossener Tür automatisch verschlossen. Darüber hinaus ist kein zusätzlicher Montageaufwand für die Lüftereinheit erforderlich, da diese mit dem Fenster bzw. der Tür eine Einheit bildet.

In zumindest einem der Luftführungskanäle kann zumindest ein Wärmetauscher angeordnet sein, um die Energierückgewinnung effizienter zu gestalten. Dieser zumindest eine Wärmetauscher ist vorzugsweise ein Plattenwärmetauscher, da derartige Wärmetauscher besser in das Blendrahmen- oder Flügelrahmenprofil integrierbar sind.

Nach einer besonderen Ausführungsvariante dazu weist der zumindest eine Wärmetauscher Wärmetauscherwände aus einem Kunststoff auf, wodurch Kältebrücken im Blendrahmen-oder Flügelrahmenprofil besser vermieden werden können. Zudem kann durch diese Ausführung des Wärmetauschers Gewicht eingespart werden, insbesondere wenn der gesamte Wärmetauscher aus Kunststoff besteht.

Es kann auch vorgesehen sein, dass der sich von der zweiten Profilwand bis zur ersten Profilwand erstreckende Luftführungskanal zumindest teilweise mit einem Gefälle ausgebildet ist, um eine bessere Kondensatabführung zu erreichen und damit die Vereisungsgefahr und in weiterer Folge einen möglichen Profilbruch zu verhindern. Aus demselben Grund kann nach einer anderen Ausführungsvariante alternativ oder zusätzlich in zumindest einem der Luftführungskanäle zumindest ein Heizelement angeordnet sein.

Es ist weiter möglich, dass die Lufteintrittsöffnungen und/oder die Luftaustrittsöffnungen mit einem regelbaren Verschlusselement versehen sind, um den wirksamen Querschnitt und damit das Luftaustauschvolumen verändern zu können. Bevorzugt erfolgt dabei die Verstellung des Verschlusselementes, d.h. die Verkleinerung oder die Vergrößerung der Querschnitte automatisch, wozu nach einer Ausführungsvariante das Verschlusselement motorbetrieben verstellbar ist.

Als besonders wirkungsvoll zur Vermeidung von Zugluft bei gleichzeitig hoher Luftaustauschleistung hat sich erwiesen, wenn der Luftführungskanal oder die Luftführungskanäle eine Querschnittsfläche oder Gesamtquerschnittfläche zwischen 1 cm² und 15 cm², insbesondere zwischen 3 cm² und 10 cm², vorzugsweise zwischen 4 cm² und 5 cm², aufweist oder aufweisen, wenn die Lüftung durch freie Konvektion erfolgt oder wenn der Luftführungskanal oder die Luftführungskanäle eine Querschnittsfläche zwischen 5 cm² und 50 cm², insbesondere zwischen 10 cm² und 40 cm², vorzugsweise zwischen 15 cm² und 20 cm², aufweist oder aufweisen, wenn die Lüftung ventilatorgestützt bzw. lüftergestützt, also motorbetrieben, erfolgt. Es wird damit auch erreicht, dass durch die Luftaustrittskanäle bzw. die Luftaustrittsöffnungen ein ausreichendes Volumen an Luft zusammen mit dem gegebenenfalls kondensierten Wasser abgeführt wird, wodurch die Vereisungsgefahr weiter reduziert werden kann. Generell kann über die Querschnittsfläche das Luftvolumen eingestellt bzw. reduziert werden.

Es ist dabei von Vorteil, wenn die raumseitig angeordnete(n) Lüftungsöffnung(en) einen größeren Querschnitt bzw. Gesamtquerschnitt aufweist bzw. aufweisen, wenn die Luft raumseitig ventilatorgestützt angesaugt wird.

Zur weiteren Automatisierung und zur Vermeidung eines zu großen Volumens an Luft, die innerhalb einer vorbestimmbaren Zeit ausgetauscht wird, ist es von Vorteil, wenn der Lüfter und/oder das Verschlusselement mit einem Feuchtigkeitssensor wirkverbunden ist oder sind.

Ein besserer Wärmeaustausch zwischen der austretenden und der eintretenden Luft wird erreicht, wenn der Luftführungskanal oder die Luftführungskanäle mäanderförmig ausgebildet sind, da damit die Strömungswege verlängert werden.

Es ist für die Zuluft und für die Abluft jeweils ein eigener Luftführungskanal angeordnet, um die Strömungsrichtungen besser definieren zu können.

Es ist weiter möglich, dass das in dem oder den Rahmenprofil(en) zumindest eine Austrittsöffnung für einen Teilvolumenstrom der Frischluft in einen Falz, der zwischen dem Blendrahmen und dem Flügelrahmen ausgebildet ist, angeordnet ist. Es kann damit eine zumindest teilweise Trocknung des Falzbereiches erreicht werden, wodurch Korrosionsproblemen, insbesondere von Beschlagsteilen des Fensters, vorgebeugt werden kann.

Zum besseren Verständnis der Erfindung wird diese anhand der nachfolgenden Figuren näher erläutert.

Es zeigen jeweils in schematisch vereinfachter Darstellung:
- Fig. 1: einen Blendrahmen in Ansicht von vorne;
- Fig. 2: den Blendrahmen nach Fig. 1 in Schrägansicht von hinten;
- Fig. 3: einen Ausschnitt aus dem Blendrahmen nach Fig. 1 in Schrägansicht mit mehreren Hohlkammern;
- Fig. 4: einen Schnitt in durch ein unteres Rahmenprofil des Blendrahmens in Ansicht von oben;
- Fig. 5: einen Ausschnitt aus einem Rahmenprofil des Blendrahmens mit darin angeordnetem Wärmetauscher geschnitten und in Ansicht von oben;
- Fig. 6: einen Ausschnitt aus einem Rahmenprofil des Blendrahmens mit mäanderförmigen Verlauf des Strömungskanals in Schrägansicht;
- Fig. 7: den Ausschnitt des Rahmenprofils nach Fig. 6 in Draufsicht geschnitten;
- Fig. 8: eine Einbausituation eines Wärmetauschers in ein Rahmenprofil;
- Fig. 9: einen Ausschnitt aus einer weiteren Ausführungsvariante des Blendrahmens im Querschnitt betrachtet;
- Fig. 10: das Fenster nach Fig. 9 in Frontansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

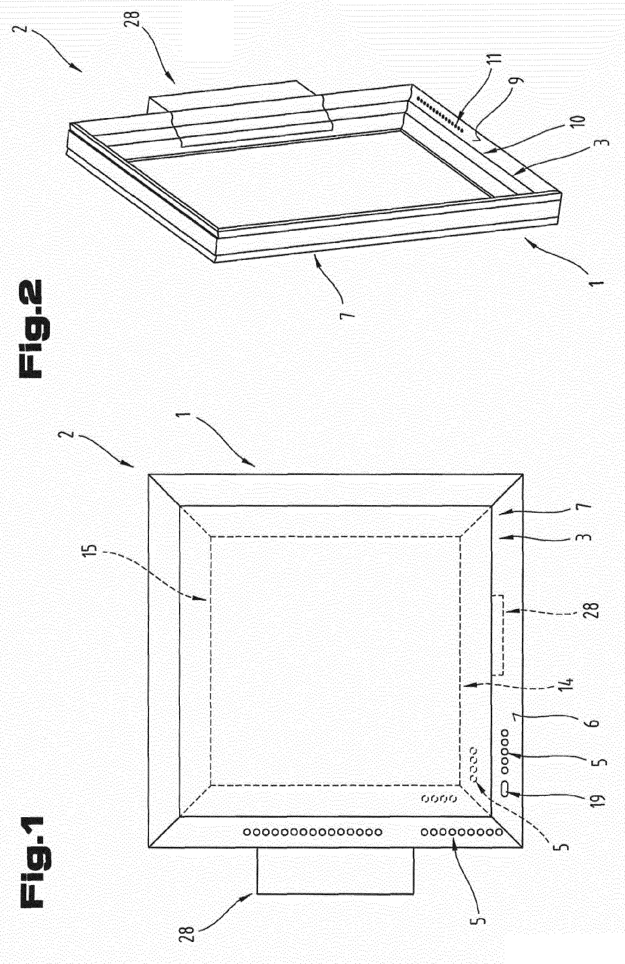

Die Fig. 1 bis 4 zeigen in vollen Linien eine Ausführungsvariante eines Blendrahmens 1 eines Fensters 2. Es sei jedoch bereits an dieser Stelle angemerkt, dass die Erfindung nicht nur auf Fenster beschränkt ist, sondern auch für Türen, also z.B. Haustüren, Nebeneingangstüren oder Balkontüren und Schiebetüren, eingesetzt werden kann.

Der Blendrahmen 1 umfasst bzw. besteht aus mehrere(n) Rahmenprofil(en) 3, so genannte Blendrahmenprofile, beispielsweise für das dargestellte Fenster 2 zwei vertikale Rahmenprofile 3 und ein dazwischen angeordnetes, oberes horizontales Rahmenprofil 3, und ein zwischen den vertikalen Rahmenprofilen 3 angeordnetes, unteres horizontales Rahmenprofil 3, sodass sich ein geschlossener Rahmen ergibt. Die Rahmenprofile 3 sind üblicherweise in den Eckbereichen auf Gehrung geschnitten und miteinander verschweißt.

Die Rahmenprofile 3 sind vorzugsweise aus einem Kunststoffprofil hergestellt, insbesondere aus einem so genannten Hohlkammerprofil mit Hohlkammern 4, und bestehen aus einem thermoplastischen Kunststoff, beispielsweise PVC, PE, PP, etc. Es sind auch so genannte WPC's (Wood Plastic Composits) oder faserverstärkte Werkstoffe einsetzbar. Obwohl nicht bevorzugt können die Rahmenprofile 3 auch aus einem metallischen Werkstoff, beispielsweise aus Aluminium bzw. einer Aluminiumlegierung, oder aus Holz bestehen.

Im Blendrahmen 1 ist zumindest eine Lufteintrittsöffnung 5 in einer Oberfläche 6 als Durchbruch durch eine erste, äußere Profilwand 7 ausgebildet. Der Begriff "äußere Profilwand 7" bezeichnet dabei jene Profilwand 7 des Blendrahmens 1, die im normal eingebauten Zustand des Fensters 2 der Außenumgebung zugewandt ist, also der Raumseite abgewandt ist. Durch diese Lufteintrittsöffnung 5 wird das Einströmen von Frischluft gemäß Pfeil 8 aus der Umgebungsatmosphäre in eine Hohlkammer 4 des Blendrahmens 1 ermöglicht. Bevorzugt ist jedoch nicht nur eine Lufteintrittsöffnung 5 ausgebildet sondern sind mehrere Lufteintrittsöffnungen vorhanden. Beispielsweise kann die Anzahl der Lufteintrittsöffnungen 5 aus einem Bereich von 2 bis 40, insbesondere 4 bis 30, vorzugsweise 4 bis 15, ausgewählt sein.

An einer inneren, d.h. dem Raum hinter dem Fenster 2 zugewandten Oberfläche 9 einer zweiten, raumseitigen Profilwand 10 des Blendrahmens 1 ist zumindest eine Luftaustrittsöffnung 11 als Durchbruch durch die zweite Profilwand 10 ausgebildet. Durch diese Luftaustrittsöffnung 11 strömt die über die Lufteintrittsöffnung(en) 5 in den Blendrahmen 1 eingeströmte Frischluft entsprechend Pfeil 12 in den Raum. Um dies zu ermöglichen ist die zumindest eine Lufteintrittsöffnung 5 mit der zumindest einen Luftaustrittsöffnung 11 im Inneren des Blendrahmens 1 mittels zumindest eines Luftführungskanals 13 strömungsverbunden. Der zumindest eine Luftführungskanal 13 ist bevorzugt durch zumindest eine der Hohlkammern 4 zumindest teilweise gebildet. In der bevorzugten Ausführungsform des Blendrahmens 1 sind mehrere Luftaustrittsöffnungen 11 vorgesehen. Beispielsweise kann die Anzahl der Luftaustrittsöffnungen 11 aus einem Bereich von 4 bis 30, vorzugsweise 4 bis 15, ausgewählt sein. Die Anzahl der Luftaustrittsöffnungen 11 kann dabei gleich der Anzahl der der Lufteintrittsöffnungen 5 sein, bevorzugt ist allerdings die Anzahl der Luftaustrittsöffnungen 11 größer, um damit die Ausströmgeschwindigkeit der Luft und in der Folge Zuglufterscheinungen zu reduzieren bzw. zu vermeiden. Prinzipiell kann allerdings die Anzahl der Luftaustrittsöffnungen 11 auch kleiner oder größer der Anzahl der Lufteintrittsöffnungen 5 sein.

Es sei an dieser Stelle angemerkt, dass es im Rahmen der Erfindung auch möglich ist, wie dies in Fig. 1 strichliert angedeutet ist, wenngleich dies nicht die bevorzugte Ausführungsvariante ist, dass die Lufteintrittsöffnung(en) 5 und die Luftaustrittsöffnung(en) 11 alternativ oder zusätzlich in zumindest einem Flügelrahmenprofil 14 eines Flügelrahmens 15 des Fensters 2 angeordnet sind. Gegebenenfalls kann dabei die Strömungsverbindung der Lufteintrittsöffnung(en) 5 mit der bzw. den Luftaustrittsöffnung(en) 11 über den Falz, der bekanntlich zwischen dem Flügelrahmen 15 und dem Blendrahmen 1 ausgebildet ist, führen, sodass also beispielsweise die eintretende Frischluft über zumindest eine Lufteintrittsöffnung 5 in den Blendrahmen 1 einströmt, von dort über zumindest eine Luftaustrittsöffnung 11 im Blendrahmen 1 in den Falz austritt, weiter über zumindest eine Lufteintrittsöffnung 5 im Flügelrahmen 15 in diesen eintritt, d.h. in einen Luftführungskanal des Flügelrahmens 15, und über zumindest eine Luftaustrittsöffnung 11 aus dem Flügelrahmen 15 in dem Raum entweicht. In diesem Fall sind die zumindest eine Lufteintrittsöffnung 5 des Flügelrahmens 15 und die zumindest eine Luftaustrittsöffnung 11 des Blendrahmens 1 in Richtung des Falzes orientiert. Bei dieser Ausführungsvariante der Wohnraumlüftung werden vorzugsweise Dichtelementen im Bereich des Übertritts der Luft in den Falz und/oder entlang des Strömungsweges im Falz angeordnet, um bei einer Kondensatbildung im Falz die Beschlagselemente des Fensters oder der Tür vor korrosivem Angriff zu schützen.

Bezüglich der Lufteintrittsöffnung(en) 5 und der Luftaustrittsöffnung(11) sowie des Luftführungskanals oder der Luftführungskanäle im Flügelrahmen 15 gelten die entsprechenden Ausführungen hierzu in Bezug auf den Blendrahmen 1 analog.

Die Lufteintrittsöffnungen 5 und die Luftaustrittsöffnungen 11 haben in der in den Fig. 1 bis 3 dargestellten Ausführungsvariante eine kreisrunden Querschnitt. Sie können aber auch einen anderen Querschnitt aufweisen, beispielsweise eine ovalen, eine quadratischen, einen rechteckförmigen, eine polygonalen, wobei auch gestreckte Ausführungen in Form eines Langloches möglich sind.

In der bevorzugten Ausführungsvariante sind zumindest die Luftaustrittsöffnungen 11, sofern mehrere vorhanden sind, in einer horizontalen Linie nebeneinander angeordnet, sodass eine horizontale Luftströmung beim Einströmen der Frischluft in den Raum ausgebildet wird, da damit eine bessere Durchmischung mit der Raumluft, insbesondere im Winter aufgrund der vorherrschenden thermischen Strömung durch die Heizung, erreicht werden kann. Zudem sind zumindest die Luftaustrittsöffnungen 11 bevorzugt im unteren bzw. untersten, horizontalen Rahmenprofil 3 des Blendrahmens 1 und/oder des Flügelrahmens 15 angeordnet. Die Lufteintrittsöffnungen können hingegen in zumindest einem der horizontalen und/oder zumindest einem der vertikalen Rahmenprofile 3 angeordnet sein. Selbstverständlich besteht aber die Möglichkeit, auch die Luftaustrittsöffnungen 11 in zumindest einem der vertikalen Flügelrahmenprofiele 14 und/oder im oberen horizontalen Flügelrahmenprofil 14 alternativ oder zusätzlich anzuordnen.

Vorzugsweise sind die Luftaustrittsöffnungen 11 ausschließlich in einem der beiden Randbereiche des Rahmenprofils 3 angeordnet, wie dies in den Fig. 1 bis 3 dargestellt ist, wobei aber auch eine mittige Anordnung oder eine Anordnung über zumindest annähernd die gesamte Länge der zweiten Profilwand 10 verteilt möglich ist.

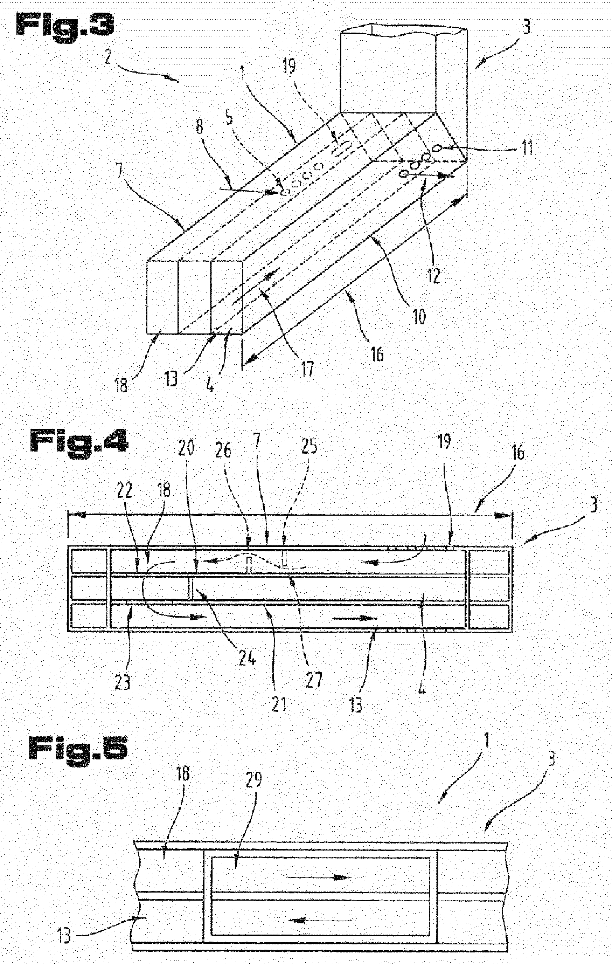

Zumindest ein Teilstück des Luftführungskanals 13 schließt unmittelbar an die zweite Profilwand 10 an, sodass also die Profilwand 10 eine Seitenwand des Luftführungskanals 13 bildet. In der Darstellung nach Fig. 3 ist damit also der äußerst rechte der beispielhaft dargestellten Luftführungskanäle 13 gemeint.

Das Teilstück des Luftführungskanals 13 weist eine Länge in Richtung einer Längserstreckung 16 der Profilwand 10 auf, die zumindest 10 %, insbesondere zumindest 20 %, vorzugsweise zumindest 35 %, besonders bevorzugt zumindest 50 %, der Länge der zweiten Profilwand 10 in dieser Richtung beträgt. Die Längserstreckung 16 kann also ein Wert aufweisen, der zumindest 60 %, vorzugsweise zumindest 80 %, der Länge der zweiten Profilwand 10 in dieser Richtung beträgt. Dieses Teilstück kann sich beispielsweise auch zumindest annähernd über die gesamte Länge des Luftführungskanals 13 erstrecken, sodass also beispielsweise die Hohlkammer 4 des Hohlkammerprofils 4 den Luftführungskanal 13 bzw. das Teilstück bildet und die Frischluft entsprechend Pfeil 17 in Fig. 3 die Hohlkammer 4 durchströmt. Für eine kleinere Länge des Teilstücks besteht die Möglichkeit, dass in der Hohlkammer 4 zumindest eine Trennwand angeordnet wird, die sich zumindest annährend senkrecht auf die Längserstreckung 16 der zweiten Profilwand 10 erstreckt.

Des Weiteren ist es bevorzugt, wenn der Querschnitt des Teilstücks des Luftführungskanals 13 dem Querschnitt nicht nur in der Form sondern auch in der Größe dem inneren Querschnitt der Hohlkammer 4 - in Richtung der Längserstreckung 16 des Rahmenprofils 3 betrachtet - entspricht. Prinzipiell ist es jedoch möglich, dass in die Hohlkammer 4 ein Luftführungskanal 13 als gesondertes Teil eingebracht wird, der eine andere Querschnittsform und/oder Querschnittsgröße aufweist, wobei auch in diesem Fall die zweite Profilwand 10 vorzugsweise eine Seitenwand des Luftführungskanals 13 bildet.

Es ist weiter bevorzugt, wenn die Lufteintrittsöffnung(en) 5 in Summe eine Querschnittsfläche zwischen 1 cm² und 30 cm², insbesondere zwischen 3 cm² und 20 cm², vorzugsweise 15 cm², aufweisen.

Die Lüftungsöffnung(en) 5 können mit einem oder mehreren Abdeckelementen, beispielsweise einem Gitter, abgedeckt sein, um einerseits möglichst zu verhindern, dass Insekten in den Luftführungskanal 13 eindringen können, und um andererseits auch in gewissem Umfang die Richtung der Strömung zu beeinflussen. Gegebenenfalls kann das Abdeckelement verstellbar angeordnet sein, sodass der Querschnitt der Lüftungsöffnung(en) 5 variiert werden kann.

Wie allgemein bekannt und auch voranstehend ausgeführt, ist der Blendrahmen 1 - bzw. auch der Flügelrahmen 15 - aus mehreren Rahmenprofilen 3 (bzw. Flügelrahmenprofilen 14) zusammengesetzt, die normalerweise in den Eckbereichen auf Gehrung geschnitten miteinander verbunden, insbesondere verschweißt, sind. Wie bereits ausgeführt können die Lufteintrittsöffnungen 5 über zumindest zwei, beispielsweise auch drei oder vier, Rahmenprofile 3 (bzw. Flügelrahmenprofiele 14) verteilt angeordnet sein, wobei auch in diesem Fall die in voranstehendem Absatz genannte Verteilung der Lufteintrittsöffnungen 5 in Hinblick auf die Länge der einzelnen Profilwände 7 bevorzugt ist. Es ist aber auch möglich, dass ein einzelnes Rahmenprofil 3 (bzw. Flügelrahmenprofiel 14) aus mehreren bzw. zumindest zwei Profilelementen zusammengesetzt ist, die miteinander verbunden, insbesondere verschweißt, sind, und sich die Lufteintrittsöffnungen 5 auf die zumindest zwei Profilelemente verteilen. Ebenso ist es bei dieser Ausführungsvariante des Blendrahmens 1 möglich, dass die Lufteintrittsöffnungen nur in einem Profilelement angeordnet sind, wodurch es möglich wird, dieses Profilelement einfach an die gewünschte Geometrie bezüglich der Luftführung anzupassen, und der Rest des Blendrahmens 1 aus Standardprofilelementen, wie sie im Fensterbau allgemein üblich und bekannt sind, herzustellen.

Gemäß einer weiteren bevorzugten Ausführungsform des Blendrahmens 1 ist in diesem, d.h. in zumindest einem der Rahmenprofile 3, ein weiterer Luftführungskanal 18 zumindest teilweise unmittelbar anschließend an die erste, äußere Profilwand 7 und zumindest teilweise im Bereich von zumindest einer Entwässerungsöffnung 19 des Blendrahmens 1, wie diese aus dem Stand der Technik bekannt sind, ausgebildet. Dabei bildet die äußere Profilwand 18 wiederum bevorzugt eine Seitenwand des weiteren Luftführungskanals 18, wie dies insbesondere in Fig. 4 dargestellt ist. Aus dieser Fig. 4 ist auch ersichtlich, dass in Innenstegen 20, 21 Durchbrüche 22, 23 ausgebildet sind, sodass die Frischluft von dem weiteren Lüftungskanal 18 in den Lüftungskanal 13 übergeleitet wird, entsprechend den Pfeilen in Fig. 4. Um dabei zu vermeiden, dass die Luft in eine in dieser Ausführungsvariante vorhandene mittlerer Hohlkammer 4, die zwischen dem ersten und dem weiteren Luftführungskanal 13, 18 angeordnet ist, einströmt, ist in dieser eine Trennwand 24 vorgesehen, die sich senkrecht auf die Längserstreckung 16 des Rahmenprofils 3 erstreckt.

Es ist aber auch möglich, dass nur zwei oder mehr als drei, beispielsweise vier, fünf, sechs, etc., Hohlkammern 4 im Rahmenprofil 3 vorgesehen sind. Auch in diesem Fall können derartige Trennwände 24 vorgesehen werden, damit die Luft von dem weiteren Lüftungskanal 18 bzw. von den Lufteintrittsöffnungen 5 direkt in den raumseitigen Lüftungskanal 13 eingeleitet wird. Andererseits ist es aber auch möglich, dass die Luft zumindest annähernd das gesamte Rahmenprofil 3 mäanderförmig durchströmt, wobei in diesem Fall die Durchbrüche 22, 23 versetzt zueinander - in Richtung der Längserstreckung 16 des Rahmenprofils 3 betrachtet - in den Stegen angeordnet sind. Je nach der Anzahl an Hohlkammern 4 bzw. Luftführungskanälen 13, 18 sind die Lufteintrittsöffnungen 5 zu den Luftaustrittsöffnungen 11 in Richtung der Längserstreckung 16 des Rahmenprofils 3 versetzt oder gegenüberliegend wie in Fig. 4 angeordnet. Es ist dabei auch möglich, dass einzelne der mehreren Hohlkammern 4 bzw. Luftführungskanälen 13, 18 durch Anordnung von Trennwänden "übersprungen werden". Durch die mäanderförmige Strömung wird eine bessere Anpassung der Temperatur der einströmenden Luft an die Raumtemperatur beim Durchströmen des Rahmenprofils 3 ermöglicht.

Angemerkt sei, dass die Durchbrüche 22, 23 auch dadurch erzeugt werden können, indem die Innenstege 20, 21 des Rahmenprofils 3 kürzer als die maximale Länge des Rahmenprofils 3 ausgebildet werden, also jeweils beabstandet zu den Stirnseiten des Rahmenprofils 3 enden.

Es ist weiters möglich, dass innerhalb zumindest eines Luftführungskanals 13, 18 mehrere Querstege 25, 26 angeordnet werden, wie dies in Fig. 4 strichliert angedeutet ist, wobei diese Querstege 25, 26 sich nicht über den gesamten Querschnitt eines Luftführungskanals 13, 18, d.h. dessen Breite, erstrecken, sodass zwischen den Querstegen 25, 26 und einer der Seitenwände des Luftführungskanals 13, 18 eine Aussparung 27 verbleibt. Diese Aussparungen 27 sind dabei in der Längsrichtung 16 des Rahmenprofils 3 vorzugsweise alternierend den beiden Seitenwänden des Luftführungskanals 13, 18 zugeordnet sind, wie dies in Fig. 4 angedeutet ist, sodass die Luft "zick-zack-förmig" durch den jeweiligen Luftführungskanal 13, 18 strömt. Es wird damit eine erreicht, dass die Frischluft eine längere Zeit im Luftführungskanal 13, 18 verbleibt, sodass ein besserer Wärmeaustausch möglich ist. Ebenso ist es möglich, dass diese Aussparungen 27 nicht oder nicht ausschließlich zwischen einer der beiden Seitenwände und dem jeweiligen Quersteg 25, 26 ausgebildet sind, sondern dass die Aussparungen 27 teilweise oder ausschließlich zwischen dem Boden oder der Deckwand des Luftführungskanals 13, 18 ausgebildet werden, wobei auch hier wiederum die alternierende Anordnung bevorzugt wird. Es sind dabei, wie angedeutet, auch Mischvarianten zwischen diesen beiden beschriebenen Varianten möglich, als Aussparungen 27 in Richtung der Seitenwände und Aussparungen 27 in Richtung des Bodens und der Deckwand. Die Anzahl dieser Querstege 25, 26 kann sich dabei einerseits nach der gewünschten Verweildauer der Luft im Luftführungskanal 13, 18 und andererseits nach der Länge des Rahmenprofils richten. Beispielsweise kann eine Anzahl zwischen einem und dreißig, insbesondere zwischen 2 und 15, dieser Querstege 25, 26 angeordnet werden.

Es sei an dieser Stelle erwähnt, dass in der bevorzugten Ausführungsform des Blendrahmens 1 bzw. des Flügelrahmens 15 der Boden und die Deckwand des jeweiligen Luftführungskanal 13, 18 durch das Rahmenprofil selbst gebildet wird.

Aus Fig. 4 ist weiter ersichtlich, dass sich die Hohlkammern 4 bzw. die Luftführungskanale 13, 18 bis in die Stirnflächen des Rahmenprofils 3 erstrecken. Nachdem bevorzugt gleichartige Rahmenprofile 3 für den Blendrahmen 1 bzw. gleichartige Flügelrahmenprofile 14 für den Flügelrahmen 15 verwendet werden, stehen die jeweils horizontalen und vertikalen Luftführungskanäle 13, 18 des vertikalen und horizontalen Rahmenprofile 3 bzw. Flügelrahmenprofile 14 miteinander in Strömungsverbindung, sofern nicht Trennwände zur Unterbindung der Strömungsverbindung zwischen den Profilen angeordnet werden. Dies ist insofern von Bedeutung, als es auch möglich ist, dass, wie dies bereits voranstehend beschrieben wurde, nicht nur in den horizontalen Profilen sondern alternativ oder zusätzlich in den vertikalen Profilen Lufteintrittsöffnungen 5 und/oder Luftaustrittsöffnungen 11 vorgesehen werden können.

In der einfachsten Ausführung dieses Wohnraumlüftungssystems wird die thermische Zirkulation, d.h. der Temperaturunterschied zwischen der Raumtemperatur und der Außentemperatur, für die Erzeugung der Luftströmung durch den Blendrahmen 1 oder den Flügelrahmen 15 verwendet. Dabei kann die bzw. können die raumseitige(n) Lufteintrittsöffnung(en) in das oder die Rahmenprofil(e) 3 für die Raumluft und die Luftaustrittsöffnung(en) 11 für die Frischluft in zwei unterschiedlichen Rahmenprofilen 3 ausgebildet. Die Luftzirkulation kann dabei über unterschiedliche Querschnitte der Öffnungen erreicht werden, insbesondere ist die bzw. sind die raumseitige(n) Lufteintrittsöffnung(en) für die Raumluft größer als die Luftaustrittsöffnung(en) 11 für die Frischluft. Es ist dabei alternativ oder zusätzlich möglich, dass die Luftaustrittsöffnung(en) 11 für die Frischluft und die raumseitige(n) Lufteintrittsöffnung(en) für die Raumluft in zueinander unterschiedlicher Höhe angeordnet sind. Insbesondere sind die für die warme Raumluft vorgesehene(n) Lufteintrittsöffnung(en) auf einem höheren Niveau angeordnet als die Luftaustrittsöffnung(en) 11 für die Frischluft.

Es besteht jedoch auch die Möglichkeit, dass die Luftströmung durch eine bzw. zumindest eine motorisch betriebene Lüftereinheit 28 erzeugt bzw. unterstützt wird, insbesondere wenn unabhängig von der gegebenen thermischen Zirkulation eine Strömungsrichtung der Frischluft vorgegeben werden soll. Diese Lüftereinheit 28 ist mit zumindest einem der Luftführungskanäle 13, 18 strömungsverbunden angeordnet und kann, wie dies in den Fig. 1 und 2 dargestellt ist, in einem Seitenbereich des Fensters 2 oder der Tür platziert sein, beispielsweise in dem das Fenster 2 oder die Tür umgebenden Mauerwerk. Dabei kann die Lüftereinheit 28 unmittelbar am Fenster 2 oder der Tür, d.h. am Blendrahmen 1, angeordnet sein, beispielsweise im Bereich eines der beiden vertikalen Rahmenprofile 3. Es ist aber auch möglich die Lüftereinheit 28 distanziert zum Blendrahmen 1 anzubringen, beispielsweise wiederum in das das Fenster 2 umgebende Mauerwerk versenkt, wobei in diesem Fall eine Verbindungskanal zwischen der Lüftereinheit 28 und dem zumindest einem Luftführungskanal 13, 18 zur Ausbildung der Strömungsverbindung angeordnet wird. In beiden Fällen befindet sich die Bedieneinheit der Lüftereinheit 28 entweder im Bereich der Mauer oder am Blendrahmen 1. Bezüglich der Lüftereinheit 28 selbst sei angemerkt, dass es sich hierbei um ein handelsübliches System mit einem Ventilator handeln kann, sodass diesbezüglich auf eine detaillierte Beschreibung verzichtet wird.

In einer bevorzugten Ausführungsform ist die Lüftereinheit 28 zumindest teilweise im Falz zwischen dem Flügelrahmen 15 und dem Blendrahmen 1 angeordnet, wie dies in Fig. 1 strichliert angedeutet ist. Die Platzierung im Bereich des unteren, horizontalen Rahmenprofils 3 ist nur eine mögliche Ausführung. Die Lüftereinheit 28 kann auch in einem der beiden vertikalen Rahmenprofile 3 angeordnet werden. Die Anordnung der Lüftereinheit 28 am Blendrahmen 1 kann dabei derart erfolgen, dass diese zumindest teilweise in den Blendrahmen 1, d.h. einer Ausnehmung des Blendrahmens 1, aufgenommen ist. Die Bedieneinheit ragt dabei vorzugsweise in den Falz bzw. liegt in der Ebene der Oberfläche des Blendrahmens 1, sodass also die Lüftereinheit 28 mit dem Bedienelement in den Blendrahmen integriert ist. Ebenso ist eine derartige Anordnung der Lüftereinheit 28 im Flügelrahmen 15 möglich, sofern im Flügelrahmen ebenfalls, wie voranstehend ausgeführt, ein Luftführungskanal angeordnet ist.

Die Bedieneinheit der Lüftereinheit 28 kann aber auch getrennt zur bzw. abnehmbar von der Lüftereinheit 28 ausgeführt sein und über eine Schnittstelle, beispielsweise eine Infrarotschnittstelle, oder eine Funkschnittstelle oder über eine Bus-Anbindung, mit der Lüftereinheit in Wirkverbindung stehen, wenn eine leitungsgebundene Verbindung nicht gewünscht oder möglich ist.

Selbstverständlich können auch mehr als eine Lüftereinheit 28 bei Bedarf angeordnet werden.

Nach einer anderen Ausführungsvariante ist vorgesehen, wie dies schematisch in Fig. 5 dargestellt ist, dass innerhalb des Rahmenprofils 3 in zumindest einem der Luftführungskanäle 13, 18 des Blendrahmens 1 ein Wärmetauscher 29 angeordnet ist. Insbesondere eignet sich diese Ausführungsvariante des Blendrahmens 1 für Ausführungen bei denen durch die Rahmenprofile 3 nicht nur die Frischluft von außen in den Raum zugeführt wird, sondern auch die Raumluft nach außen abgeführt wird, also durch den Blendrahmen 1 ein teilweiser Luftaustausch der Raumluft erfolgt. In diesem Fall sind einerseits zumindest ein Luftführungskanal 13 für die Zufuhr der Frischluft und zumindest ein Luftführungskanal 18 für die Abfuhr der Raumluft im Rahmenprofil angeordnet, wobei für die Abfuhr der Raumluft an der Innenseite des Blendrahmens 1, d.h. der Profilwand 10, entsprechende Lufteintrittsöffnungen und an der Außenseite, d.h. der Profilwand 7, Luftaustrittsöffnungen zum Ableiten der Raumluft in die Umgebungsatmosphäre angeordnet sind. Für diese Öffnungen gelten die voranstehenden Ausführungen zu den entsprechenden Öffnungen für die Frischluftzufuhr. Generell kann diese Ausführung aber auch für Rahmenprofile 3 ohne Wärmetauscher 29 verwendet werden. Es ist auch möglich, dass die Raumluft und/oder die Frischluft mäanderförmig durch das Rahmenprofil 3 strömt bzw. strömen, wozu in diesem eine entsprechende Anzahl an Luftführungskanälen 13, 18 angeordnet werden, in denen gegebenenfalls auch die Querstege 26, 27 angeordnet werden können.

Es sei an dieser Stelle nochmals ausdrücklich darauf hingewiesen, dass sämtliche Ausführungen zum Blendrahmen 1 zumindest teilweise auch auf den Flügelrahmen 15 Anwendung finden können.

Der Wärmetauscher 29 ist vorzugsweise als Plattenwärmetauscher ausgeführt, wobei prinzipiell aber auch andere Wärmetauschertypen verwendet werden können. Es ist weiter bevorzugt, wenn der Wärmtauscher 29 als Gegenstromwärmetauscher ausgeführt ist, wobei aber auch in einer nicht bevorzugten Ausführungsvariante dieser als Gleichstromwärmetauscher ausgeführt sein kann.

Der Wärmetauscher 29 nach Fig. 5 weist jeweils einen Strömungsweg für die Raumluft und einen Strömungsweg für die Frischluft auf. Es sind aber auch Wärmetauscher einsetzbar, die mehr als jeweils einen Strömungsweg für die Raumluft und/oder die Frischluft aufweisen.

Der Wärmetauscher 29 ist vorzugsweise so dimensioniert, dass er einen Außenquerschnitt aufweist, der zumindest annähernd einer lichten Weite, d.h. einem Innenquerschnitt, des Rahmenprofils 3 entspricht, wie dies in Fig. 5 dargestellt ist. Auf diese Weise wird eine Querschnittverjüngung der Luftströmungswege möglichst vermieden. Die Innenstege 21, 22 des Rahmenprofils 3 sind in diesem Fall ausgenommen, um die Einpassung des Wärmetauschers 29 zu ermöglichen. Der Wärmetauscherquerschnitt kann aber auch kleiner gewählt werden als der entsprechende Innenquerschnitt des Rahmenprofils 3.

Die Länge bzw. die Fläche des Wärmetauschers 29 kann entsprechend der gewünschten von der Raumluft zur Vorwärmung der Frischluft auf diese zu übertragende Wärmemenge gewählt werden. Wegen des Druckgefälles und zur Verbesserung des Wirkungsgrades beträgt die Länge aber vorzugsweise maximal 20 cm, insbesondere maximal 15 cm.

Der Wärmetauscher 29 kann gleichzeitig auch als Armierung bzw. Versteifungselement des Rahmenprofils 3 wirken, sodass auf ein zusätzliches derartiges Element, das üblicherweise angeordnet wird, verzichtet werden kann.

Der Wärmetauscher 29 kann aber auch derart angeordnet werden, dass die erste Profilwand 7 und/oder die zweite Profilwand 10 zumindest teilweise durch den Wärmetauscher 29 gebildet werden.

Prinzipiell kann der Wärmtauscher 29 aus einem Metall bzw. einer Legierung gefertigt sein. Vorzugsweise besteht der Wärmetauscher 29 zumindest teilweise, insbesondere zur Gänze, aus zumindest einem Kunststoff, beispielsweise aus PVC, PMMA, PC, PE oder aus Kombinationen dieser Kunststoffe.

Es ist auch möglich, dass mehr als ein Wärmetauscher 29 im Blendrahmen 1 oder im Flügelrahmen 15 angeordnet werden, beispielsweise verteilt auf mehr als ein Rahmenprofil 3 bzw. Flügelrahmenprofil 14.

Insbesondere im Winter könnte bei dem Fenster 1 bzw. der Tür das Problem der teilweisen Vereisung der Rahmenprofile 3 bzw. Flügelrahmenprofile 15 bestehen, da die Raumluft auf den Weg nach außen Feuchtigkeit mitführt, die aufgrund der Abkühlung kondensiert. Um diesem Problem zumindest teilweise abzuhelfen kann zumindest eine der nachstehenden Ausführungsvarianten von Vorteil sein.

So ist es beispielsweise möglich, dass der sich von der zweiten Profilwand 10 bis zur ersten Profilwand 7 erstreckende Luftführungskanal 13 zumindest teilweise mit einem Gefälle ausgebildet ist, damit das Wasser schneller abläuft. Das Gefälle kann dabei einen Wert aufweisen, der ausgewählt ist aus einem Bereich von 1 ° bis 35 °, insbesondere von 2 ° und 20 °, vorzugsweise von 5 ° und 15 °. Hergestellt kann das Gefälle beispielsweise durch entsprechende Formgebung des Bodens des Luftführungskanals 13 oder durch einlegen eines Keilelementes. Insbesondere in diesem Fall, aber nicht nur in diesem Fall, ist es auch von Vorteil, wenn der Luftführungskanal 13 oder die Luftführungskanäle 13, 18 eine Querschnittsfläche wie voranstehend ausgeführt aufweisen, um den Flüssigkeitsaustrag aus dem Rahmenprofil 3 mit einem entsprechenden Luftvolumen zu unterstützen.

Auch im Wärmetauscher 29 kann ein entsprechendes Gefälle ausgebildet sein, das bis zu einem Wert von 90 ° reichen kann, wenn der Wärmetauscher 29 stehend - hinsichtlich seiner Luftführungskanäle - eingebaut wird, also beispielsweise in eines der vertikalen Rahmenprofile 3.

Alternativ oder zusätzlich dazu ist es möglich, dass in zumindest einem der Luftführungskanäle 13, 18 oder in zumindest einer Wand der Luftführungskanale 13, 18 zumindest ein Heizelement, insbesondere ein Widerstandsheizelement, angeordnet ist. Das Heizelement kann beispielsweise ein Heizdraht bzw. ein Heizstab oder eine Heizmatte etc. sein. Das Heizelement kann geregelt sein, sodass die Heizleistung nur bei Bedarf und entsprechend an die Außentemperatur angepasst werden kann.

Nach einer anderen Ausführungsvariante des Fensters 2 oder der Tür kann vorgesehen sein, dass das Luftvolumen, das ausgetauscht werden soll, geregelt wird. In einfachsten Fall kann die Regelung manuell erfolgen, wozu bevorzugt im bzw. in den Luftführungskanälen 13, 18 zumindest ein Verschlusselement, beispielsweise ein Schieber, relativ verstellbar bezüglich der Lufteintrittsöffnungen 5 und/oder der Luftaustrittsöffnungen 11 angeordnet ist, sodass der wirksame Querschnitt der Lufteintrittsöffnungen 5 und/oder der Luftaustrittsöffnungen 11 verändert werden kann. In der bevorzugten Ausführungsform ist das Verschlusselement allerdings motorbetrieben verstellbar, wobei gemäß einer weiteren Ausführungsvariante das Antriebselement für diese Verstellung des Verschlusselementes, also der Motor, mit einem Feuchtigkeitssensor drahtgebunden oder drahtlos verbunden sein kann, sodass das auszutauschende Luftvolumen entsprechend angepasst an den Feuchtegehalt der Raumluft geregelt werden kann. Alternativ oder zusätzlich dazu ist es möglich, dass auch die Lüftereinheit 28, also beispielsweise ein Ventilator, mit einem derartigen Feuchtigkeitssensor drahtgebunden oder drahtlos verbunden ist.

Es kann weiter von Vorteil sein, wenn die Lüftereinheit 28 zumindest teilweise mit einem Schalldämmelement versehen ist.

Bei voranstehenden Ausführungen wurde davon ausgegangen, dass die Rahmenprofile 3 als Hohlkammerprofile ausgeführt sind, die automatisch durch das Herstellungsverfahren die Hohlkammern 4 aufweisen, die als Luftführungskanäle 13, 18 verwendet werden können. Die Rahmenprofile 3 können aber auch aus einem Vollwerkstoff, beispielsweise Holz bestehen. In diesem Fall werden die entsprechenden Luftführungskanäle 13, 18 durch entsprechende Bearbeitung des Rahmenprofils 3 extra hergestellt.

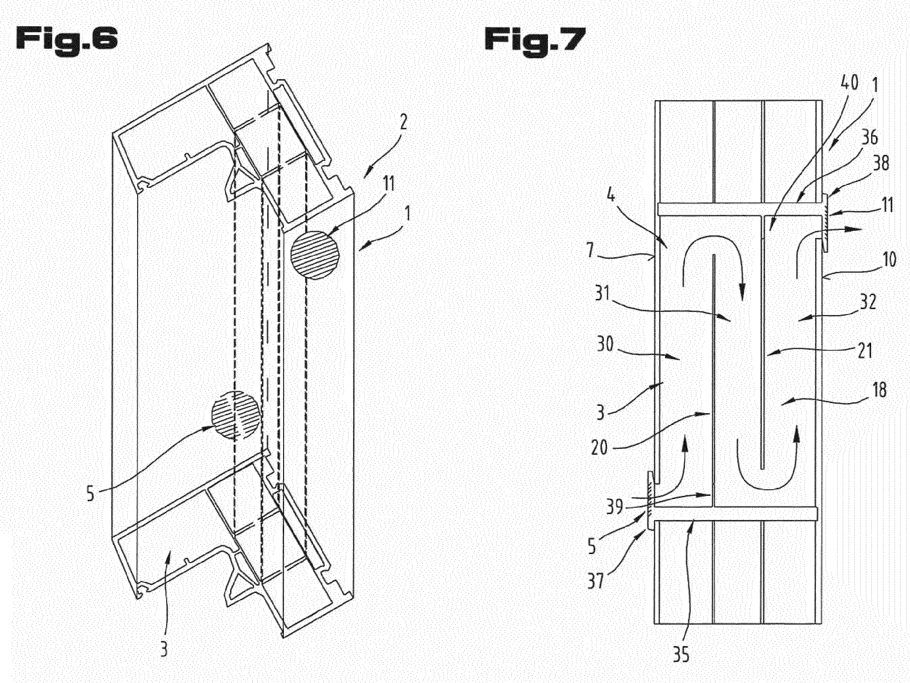

In den Fig. 6 und 7 ist der Blendrahmen 1 eines Fensters 2 im Ausschnitt in Schrägansicht bzw. in Draufsicht geschnitten dargestellt. Das Rahmenprofil 3 ist wieder bevorzugt als Hohlkammerprofil ausgebildet.

In diesen Fig. 6 und 7 ist eine Ausführungsvariante eines mäanderförmig verlaufenden Luftführungskanals 18 gezeigt. Der Luftführungskanal 18 weist in Strömungsrichtung gemäß den eingezeichneten Pfeilen in einer Ebene drei nebeneinander angeordnete Teilkanäle 30 bis 32 - es können auch weniger als drei oder mehr als drei Teilkanäle angeordnet sein - auf, die von der über die Lufteintrittsöffnungen 5 in den Teilkanal 30 einströmenden Luft nacheinander durchströmt werden. Die aufgewärmte Luft strömt über die Luftaustrittsöffnungen 11 aus dem Teilkanal 32 in den hinter dem Fenster 2 liegenden Raum.

Eine ähnliche oder die gleiche Anordnung kann für das Ausströmen der Raumluft aus dem Raum ins Freie vorgesehen sein, sodass auf deren Darstellung verzichtet wird.

In der außenseitigen Profilwand 7 und in der raumseitigen Profilwand 10 ist jeweils eine Öffnung 33, 34 zum Teilkanal 30 bzw. zum Teilkanal 32 ausgebildet. In diesen Öffnung 33 bzw. 34 ist jeweils ein gesondertes Einschubelement 35 bzw. 36 die Öffnung mit einem flanschförmigen Endbereich 37 bzw. 38 überdeckend angeordnet. Diese Endbereiche 37 bzw. 38 weisen die Lufteintrittsöffnungen 5 bzw. die Luftaustrittsöffnungen 11 auf.

Die Anordnung derartiger Einschubelemente 35, 36 hat einerseits produktionstechnische Vorteile, andererseits ist es damit möglich die Strömungsquerschnitte der Lufteintrittsöffnungen 5 und/oder der Luftaustrittsöffnungen 11 durch Austausch des Einschubelementes 35 und/oder 36 durch eine Einschubelement 35 und/oder 36 mit Lufteintrittsöffnungen 5 bzw. Luftaustrittsöffnungen 11 mit kleinerem oder größerem (Gesamt)Querschnitt zu verändern und anzupassen.

In der bevorzugten Ausführungsform erstrecken sich die Einschubelemente 35, 36 von der Profilwand 7 bis zur Profilwand 10 bzw. umgekehrt, also über zumindest annähernd die gesamte Breite des Rahmenprofils 3. Bei Bedarf können diese Einschubelemente 35, 36 einen Steg 39, 40 aufweisen, der im eingebauten Zustand des jeweiligen Einschubelementes 35, 36 einen Teil der Innenstege 20, 21, die die Hohlkammern 4 in Längsrichtung voneinander trennen, bildet.

Es ist weiter möglich, dass die Einschubelemente 35, 36 an den, dem flanschförmigen Endbereich 37, 38 gegenüberliegenden Seite von einer Nut in der entsprechenden Profilwand 7 oder 10 aufgenommen sind, um damit eine bessere Einbindung der Einschubelemente 35, 36 in das Profilelement 3 zu erreichen. Für diesen Zweck können aber auch andere, geeignete Maßnahmen, wie z.B. Stege an der Innenseite der jeweiligen Profilwand 7 oder 10, zwischen denen die Endbereiche der Einschubelemente 35, 36 aufgenommen werden, getroffen werden.

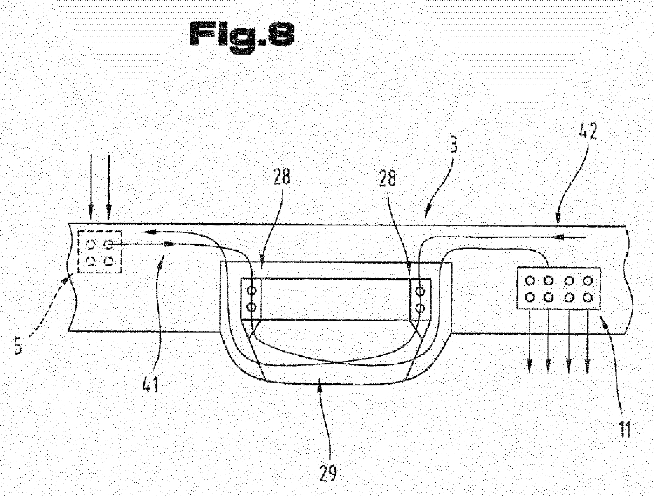

In Fig. 8 ist eine bevorzugte Einbausituation des Wärmetauschers 29 in ein Rahmenprofil 3 vereinfacht dargestellt. Aus Gründen der Übersichtlichkeit wurde dabei auf die Darstellung der Innenstege 20, 21 verzichtet.

Der Wärmetauscher 29 ist mit zwei Lüftereinheiten 28, insbesondere motorbetriebene Ventilatoren, verbunden, wovon eine für die Ansaugung der Frischluft entsprechend Pfeil 41 und eine für die Ansaugung der Raumluft entsprechend Pfeil 42 dient.

Die Frischluft tritt dabei von außen über die Lufteintrittsöffnungen 5 in das Rahmenprofil 3, wie voranstehend beschrieben, ein und gelangt über die entsprechende Lüftereinheit 28 in den Wärmetauscher 29. Die Raumluft wird über nicht dargestellte Lufteintrittsöffnungen - insbesondere können diese in einem anderen, an das dargestellte Rahmenprofil 3 anschließendes Rahmenprofil 3 angeordnet sein - von der entsprechenden Lüftereinheit 28 ebenfalls in den Wärmetauscher 29 eingesaugt und strömt in diesem im Kreuzstrom zur Frischluft. Die so aufgewärmte Frischluft verlässt in der Folge das Rahmenprofil 3 über die Luftaustrittsöffnungen 11.

In der bevorzugten Ausführungsvariante ist der Wärmetauscher entsprechend der EP 1 296 107 A2 aufgebaut, die in diesem Umfang zum Inhalt gegenständlicher Beschreibung gehört.

Sofern vor dem Fenster oder der Tür eine Beschattungseinrichtung angebracht ist, insbesondere ein Rollladen, befinden sich die Luftaustrittsöffnungen für die Raumluft an der Außenseite des Rahmenprofils 3 in vertikaler Richtung vorzugsweise unterhalb der Beschattungseinrichtung, um einer möglichen Vereisung vorzubeugen. D.h. mit anderen Worten, dass die Raumluft unterhalb der Beschattungseinrichtung ausgeblasen wird. Die Ansaugung der Frischluft, d.h. die Lufteintrittsöffnungen 5, kann - bzw. können - hinter der Beschattungseinrichtung angeordnet sein.

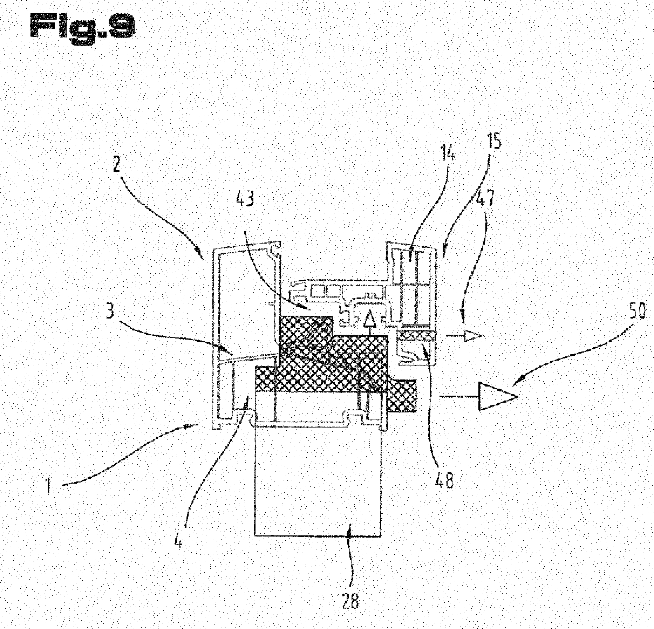

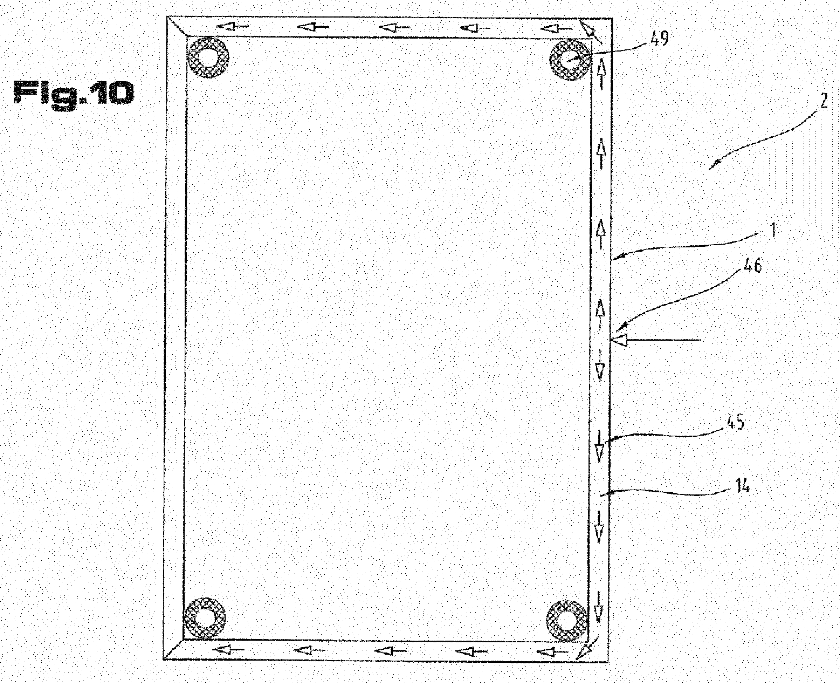

Eine weitere Ausführungsvariante des Fensters 2 bzw. der Tür ist in den Fig. 9 und 10 dargestellt. Das Fenster 2 weist wiederum den Blendrahmen 1 mit den Rahmenprofilen 3 sowie den Flügelrahmen 15 mit den Flügelrahmenprofilen 14 auf, die jeweils aus Hohlkammerprofilen mit mehreren Hohlkammern 4 bestehen können.

Wie bekannt wird zwischen dem Blendrahmen 1 und dem Flügelrahmen 15 ein so genannter Falz 43 ausgebildet.

Am und/oder im Blendrahmen 1 ist vorzugsweise die Lüftereinheit 28 angeordnet, wie dies bereits voranstehend beschrieben wurde. Es wird daher zur Vermeidung von Wiederholungen auf diese Ausführungen verwiesen.

Auch bei dieser Ausführungsvariante wird Frischluft von außen über den Blendrahmen 1 angesaugt und in diesem vorgewärmt. Ein Teilvolumen dieser Frischluft wird allerdings abgezweigt und entsprechend Pfeil 43 in den Falz 43 eingeleitet. Dieser abgezweigte Luftstrom dient dazu, um den Falzbereich und insbesondere die in diesem angeordneten Beschläge sowie ein eventuell feuchtesensibles Rahmenmaterial des Fensters 2 oder der Tür möglichst trocken zu halten oder zu trocknen, um damit Korrosionsprobleme möglichst zu vermeiden, die z.B. durch Kondensatbildung im Falz 43 auftreten können.

Das abgezweigte Teilvolumen des angesaugten Frischluftstroms durchströmt den Falz 43 vorzugsweise über zumindest annähernd den gesamten Umfang des Fensters 2, wie dies in Fig. 10 durch Pfeile 45 angedeutet ist. Es besteht aber auch die Möglichkeit, dass dieser Teilstrom sich nur über einen Bereich von zumindest 50 % insbesondere zumindest 70 %, vorzugsweise zumindest 85 %, des gesamten Umfanges des Fensters 2 erstreckt. Vorzugsweise werden dabei jene Bereiche des Falzes 43 abgedeckt, in denen Beschlagteile angeordnet sind.

Die Zuführung des Teilfrischluftstromes erfolgt vorzugsweise in einem Mittelbereich 46 zumindest eines der vertikalen Flügelrahmenprofile 14, wie dies in Fig. 10 angedeutet ist. Es ist dazu in dem oder den Blendrahmenprofil(en), d.h Rahmenprofil(en) 3, zumindest eine Austrittsöffnung in den Falz 43 vorgesehen, wobei auch mehrere derartige Austrittsöffnungen in einem und/oder auf mehrere Rahmenprofil(e) 3 verteilt angeordnet werden können, wobei mit letztgenannter Ausführungsvariante die Zuführung des Teilfrischluftstromes in den Falz 43 über mehrere Rahmenprofilen 3 des Fensters 2 ermöglicht wird, sodass also der Teilfrischluftstrom z.B. über beide vertikale Rahmenprofile und/oder zumindest eines der horizontalen Rahmenprofile 3 dem Falz 43 zugeführt werden kann.

Generell sei angemerkt, dass zwar die mittige Zuführung wie in Fig. 10 dargestellt bevorzugt ist, allerdings eine Zuführung des Teilfrischluftstromes in den Falz 43 auch in einem anderen Bereich des Falzes 43, z.B. oben oder unten, erfolgen kann.

Der Teilfrischluftstrom wird nach dem zumindest teilweise umströmen des Umfanges des Falzes 43 aus diesem in den Raum entsprechend Pfeil 47 eingeleitet. Dazu kann in dem Flügelrahmenprofil 14 bzw. können in den Flügelrahmenprofilen 14 zumindest ein entsprechender Luftführungskanal 48 vorgesehen werden, wobei auch mehrere derartige Luftführungskanäle 48 ausgebildet werden können. Der Luftführungskanal 48 oder die Luftführungskanäle 48 verlaufen bevorzugt horizontal durch das oder die Flügelrahmenprofil(e) 14. Beispielsweise kann der Teilfrischluftstrom über zumindest eine entsprechende Öffnung bzw. zumindest einen Durchbruch 49 im Eckbereich des Flügelrahmenprofils 14 aus dem Falz 43 in den Raum abgeleitet werden, wie dies in Fig. 10 schematisch angedeutet ist. Der Durchbruch 49 oder die Durchbrüche 49 kann/können aber auch in einem anderen Bereich des Flügelrahmenprofils 14 angeordnet werden.

Der restliche Frischluftstrom, d.h. das Hauptvolumen der angesaugten Frischluft, wird entsprechend voranstehenden Ausführungen im Rahmenprofil 3 oder den Rahmenprofilen 3 des Blendrahmens geführt und entsprechend Pfeil 50 dem Raum zugeführt.

Der für den Falz 43 abgezweigte Teilfrischluftstrom kann maximal 30 %, insbesondere maximal 20 %, vorzugsweise maximal 15 %, des gesamten angesaugten Frischluftstroms betragen, wobei diese Angaben auf den Volumenstrom an angesaugter Frischluft bezogen ist.

Die Regulierung und/oder Steuerung des Volumens an abgezweigtem Teilfrischluftstrom kann durch entsprechende Dimensionierung der Austrittsöffnungen aus dem oder den Rahmenprofil(en) 3 in den Falz 43 erfolgen. Ebenso kann bzw. können dazu an dieser bzw. diesen Austrittsöffnung(en) entsprechende Stellmittel, insbesondere motorbetriebene und/oder feuchtereaktive und/oder vorgespannte, vorgesehen werden, mit denen ein Teil oder der gesamte Querschnitt dieser Austrittsöffnung(en) verschlossen werden kann.

Die Ausführungsbeispiele zeigen mögliche Ausführungsvarianten des Blendrahmens 1 bzw. des Flügelrahmens 15 eines Fensters 1 oder einer Tür.

Der Ordnung halber sei abschließend darauf hingewiesen, dass zum besseren Verständnis des Aufbaus des Blendrahmens 1 bzw. des Flügelrahmens 15 eines Fensters 1 oder einer Tür diese bzw. deren Bestandteile teilweise unmaßstäblich und/oder vergrößert und/oder verkleinert dargestellt wurden.

**Bezugszeichenaufstellung**

| | | | |
|---|---|---|---|
| | | 36 | Einschubelement |
| 1 | Blendrahmen | 37 | Endbereich |
| 2 | Fenster | 38 | Endbereich |
| 3 | Rahmenprofil | 39 | Steg |
| 4 | Hohlkammer | 40 | Steg |
| 5 | Lufteintrittsöffnung | | |
| | | | |
| 6 | Oberfläche | 41 | Pfeil |
| 7 | Profilwand | 42 | Pfeil |
| 8 | Pfeil | 43 | Falz |
| 9 | Oberfläche | 44 | Pfeil |
| 10 | Profilwand | 45 | Pfeil |
| | | | |
| 11 | Luftaustrittsöffnung | 46 | Mittelbereich |
| 12 | Pfeil | 47 | Pfeil |
| 13 | Luftführungskanal | 48 | Luftführungskanal |
| 14 | Flügelrahmenprofil | 49 | Durchbruch |
| 15 | Flügelrahmen | 50 | Pfeil |
| | | | |
| 16 | Längserstreckung | | |
| 17 | Pfeil | | |
| 18 | Luftführungskanal | | |
| 19 | Entwässerungsöffnung | | |
| 20 | Innensteg | | |
| | | | |
| 21 | Innensteg | | |
| 22 | Durchbruch | | |
| 23 | Durchbruch | | |
| 24 | Trennwand | | |
| 25 | Quersteg | | |
| | | | |
| 26 | Quersteg | | |
| 27 | Aussparung | | |
| 28 | Lüftereinheit | | |
| 29 | Wärmetauscher | | |
| 30 | Teilkanal | | |
| | | | |
| 31 | Teilkanal | | |
| 32 | Teilkanal | | |
| 33 | Öffnung | | |
| 34 | Öffnung | | |
| 35 | Einschubelement | | |

## Patentansprüche

1. Fenster (2) oder Tür umfassend einen Blendrahmen (1) und einen Flügelrahmen (15), wobei für die Zufuhr von Frischluft der Blendrahmen (1) oder der Flügelrahmen (15) zumindest eine Lufteintrittsöffnung (5) in einer ersten, äußeren, durch eine erste Profilwand (7) gebildete Oberfläche (6) und zumindest eine Luftaustrittsöffnung (11) in einer zweiten, inneren, durch eine zweite Profilwand (10) gebildete Oberfläche (9) aufweist, die durch zumindest einen Luftführungskanal (13) im Blendrahmen (1) oder im Flügelrahmen (15) strömungsverbunden sind, und für die Abfuhr von Raumluft der Blendrahmen (1) oder der Flügelrahmen (15) in der zweiten Profilwand (10) Lufteintrittsöffnungen und in der ersten Profilwand (7) Luftaustrittsöffnungen zum Ableiten der Raumluft in die Umgebungsatmosphäre aufweist, die durch zumindest einen weiteren Luftführungskanal (18) im Blendrahmen (1) oder im Flügelrahmen (15) strömungsverbunden sind, sodass für die Zuluft und für die Abluft jeweils ein eigener Luftführungskanal (13, 18) angeordnet ist, wobei ein Teilstück des Luftführungskanals (13) unmittelbar anschließend an die zweite Profilwand (10) ausgebildet ist, wobei dieses Teilstück eine Länge in Richtung der Längserstreckung (16) der Profilwand aufweist, die zumindest 10 % der Länge der zweiten Profilwand (10) in dieser Richtung beträgt, **dadurch gekennzeichnet, dass** in der zweiten Profilwand (10) zwischen vier und dreißig Luftaustrittsöffnungen (11) für die Frischluft angeordnet sind.

2. Fenster (2) oder Tür nach Anspruch 1, **dadurch gekennzeichnet, dass** sowohl im Blendrahmen (1) als auch im Flügelrahmen (15) zumindest eine Lufteintrittsöffnung (5), zumindest eine Luftaustrittsöffnung (11) und zumindest ein Luftführungskanal (13) angeordnet sind.

3. Fenster (2) oder Tür nach Anspruch 1 oder 2, **dadurch gekennzeichnet, dass** der Blendrahmen (1) und/oder der Flügelrahmen (15) durch ein Hohlkammerprofil mit mehreren Hohlkammern (4) gebildet sind.

4. Fenster (2) oder Tür nach einem der Ansprüche 1 bis 3, **dadurch gekennzeichnet, dass** mehrere Lufteintrittsöffnungen (5) angeordnet sind, wobei sich diese mehreren Lufteintrittsöffnungen (5) in Summe eine Querschnittsfläche zwischen 1 cm² und 30 cm², insbesondere zwischen 3 cm² und 20 cm², vorzugsweise 15 cm², aufweisen.

5. Fenster (2) oder Tür nach einem der Ansprüche 1 bis 4, **dadurch gekennzeichnet, dass** der Blendrahmen (1) und der Flügelrahmen (15) aus mehreren Profilelementen zusammengesetzt ist, wobei die Lufteintrittsöffnung(en) (5) und/oder die Luftaustrittsöffnung(en) (11) in zumindest zwei Profilelementen angeordnet sind.

6. Fenster (2) oder Tür nach einem der Ansprüche 1 bis 5, **dadurch gekennzeichnet, dass** ein weiterer Luftführungskanal (18) zumindest teilweise unmittelbar anschließend an die erste Profilwand (7) und teilweise im Bereich von zumindest einer Entwässerungsöffnung (19) des Blendrahmens (1) oder des Flügelrahmens (15) ausgebildet ist.

7. Fenster (2) oder Tür nach einem der Ansprüche 1 bis 6, **dadurch gekennzeichnet, dass** eine motorisch betriebene Lüftereinheit (28) mit dem Luftführungskanal (13) oder den Luftführungskanälen (13, 18) strömungsverbunden angeordnet ist.

8. Fenster (2) oder Tür nach Anspruch 7, **dadurch gekennzeichnet, dass** die Lüftereinheit (28) zumindest teilweise in einem Falz zwischen dem Flügelrahmen (15) und dem Blendrahmen (1) angeordnet ist.

9. Fenster (2) oder Tür nach einem der Ansprüche 1 bis 8, **dadurch gekennzeichnet, dass** in zumindest einem der Luftführungskanäle (13, 18) zumindest ein Wärmetauscher (29) angeordnet ist.

10. Fenster (2) oder Tür nach Anspruch 9, **dadurch gekennzeichnet, dass** der zumindest eine Wärmetauscher (29) ein Plattenwärmetauscher ist.

11. Fenster (2) oder Tür nach Anspruch 9 oder 10, **dadurch gekennzeichnet, dass** der zumindest eine Wärmetauscher (29) Wärmetauscherwände aus einem Kunststoff aufweist.

12. Fenster (2) oder Tür nach einem der Ansprüche 1 bis 11, **dadurch gekennzeichnet, dass** der sich von der zweiten Profilwand (20) bis zur ersten Profilwand (7) erstreckende Luftführungskanal (13) zumindest teilweise mit einem Gefälle ausgebildet ist.

13. Fenster (2) oder Tür nach einem der Ansprüche 1 bis 12, **dadurch gekennzeichnet, dass** in zumindest einem der Luftführungskanäle (13, 18) und/oder in zumindest einer Wand der Luftführungskanale (13, 18) zumindest ein Heizelement angeordnet ist.

14. Fenster (2) oder Tür nach einem der Ansprüche 1 bis 13, **dadurch gekennzeichnet, dass** die Lufteintrittsöffnungen (5) und/oder die Luftaustrittsöffnungen (11) mit einem regelbaren Verschlusselement versehen sind.

15. Fenster (2) oder Tür nach einem der Ansprüche 1 bis 14, **dadurch gekennzeichnet, dass** das Verschlusselement motorbetrieben verstellbar ist.

16. Fenster (2) oder Tür nach einem der Ansprüche 1 bis 15, **dadurch gekennzeichnet, dass** der Luftführungskanal (13) oder die Luftführungskanäle (13, 18) eine Querschnittsfläche oder Gesamtquerschnittfläche zwischen 1 cm² und 15 cm², insbesondere zwischen 3 cm² und 10 cm², vorzugsweise zwischen 4 cm² und 5 cm², aufweist oder aufweisen, wenn die Lüftung durch freie Konvektion erfolgt oder dass der Luftführungskanal (13) oder die Luftführungskanäle (13) eine Querschnittsfläche zwischen 5 cm² und 50 cm², insbesondere zwischen 10 cm² und 40 cm², vorzugsweise zwischen 15 cm² und 20 cm², aufweist oder aufweisen, wenn die Lüftung ventilatorgestützt erfolgt.

17. Fenster (2) oder Tür nach einem der Ansprüche 1 bis 16, **dadurch gekennzeichnet, dass** die Lüftereinheit (28) und/oder das Verschlusselement mit eine Feuchtigkeitssensor wirkverbunden ist oder sind.

18. Fenster (2) oder Tür nach einem der Ansprüche 1 bis 17, **dadurch gekennzeichnet, dass** der Luftführungskanal (13) oder die Luftführungskanäle (13, 18) mäanderförmig ausgebildet sind.

19. Fenster (2) oder Tür nach einem der Ansprüche 1 bis 18, **dadurch gekennzeichnet, dass** das in dem oder den Rahmenprofil(en) 3 zumindest eine Austrittsöffnung für einen Teilvolumenstrom der Frischluft in einen Falz 43, der zwischen dem Blendrahmen (1) und dem Flügelrahmen (15) ausgebildet ist, angeordnet ist.

## Claims

1. Window (2) or door comprising a window frame (1) and a casement (15), wherein for the supply of fresh air the window frame (1) or the casement (15) comprises at least one air inlet opening (5) in a first outer surface (6) formed by a first profile wall (7) and at least one air outlet opening (11) in a second inner surface (9) formed by a second profile wall (10), which are fluidically connected by a least one air duct (13) in the window frame (1) or in the casement (15), and for the discharge of room air the window frame (1) or the casement (15) in the second profile wall (10) comprises air inlet openings and in the first profile wall (7) comprises air outlet openings for conducting the room air away into the surrounding atmosphere, which are fluidically connected by at least one further air duct (18) in the window frame (1) or in the casement (15), so that in each case a separate air duct (13, 18) is arranged for the supplied air and for the extracted air, wherein a portion of the air duct (13) is configured immediately adjacent to the second profile wall (10), wherein this portion has a length in the direction of the longitudinal extent (16) of the profile wall which is at least 10% of the length of the second profile wall (10) in this direction, **characterised in that** between four and thirty air outlet openings (11) for the fresh air are arranged in the second profile wall (10).

2. Window (2) or door according to claim 1, **characterised in that** at least one air inlet opening (5), at least one air outlet opening (11) and at least one air duct (13) are arranged both in the window frame (1) and in the casement (15).

3. Window (2) or door according to claim 1 or 2, **characterised in that** the window frame (1) and/or the casement (15) are formed by a hollow chamber profile with a plurality of hollow chambers (4).

4. Window (2) or door according to one of claims 1 to 3, **characterised in that** a plurality of air inlet openings (5) are arranged, wherein this plurality of air inlet openings (5) in total have a cross-sectional surface of between 1 cm² and 30 cm², in particular between 3 cm² and 20 cm², preferably 15 cm².

5. Window (2) or door according to one of claims 1 to 4, **characterised in that** the window frame (1) and the casement (15) are made up of a plurality of profile elements, wherein the air inlet opening(s) (5) and/or the air outlet opening(s) (11) are arranged in at least two profile elements.

6. Window (2) or door according to one of claims 1 to 5, **characterised in that** a further air duct (18) is configured at least partially immediately adjacent to the first profile wall (7) and partially in the region of at least one drainage opening (19) of the window frame (1) or the casement (15).

7. Window (2) or door according to one of claims 1 to 6, **characterised in that** a motor-operated fan unit (28) is arranged so as to be fluidically connected to the air duct (13) or the air ducts (13, 18).

8. Window (2) or door according to claim 7, **characterised in that** the fan unit (28) is arranged at least partially in a rebate between the casement (15) and the window frame (1).

9. Window (2) or door according to one of claims 1 to 8, **characterised in that** at least one heat exchanger (29) is arranged in at least one of the air ducts (13, 18).

10. Window (2) or door according to claim 9, **characterised in that** the at least one heat exchanger (29) is a plate heat exchanger.

11. Window (2) or door according to claim 9 or 10, **characterised in that** the at least one heat exchanger (29) has heat exchanger walls made of a plastics material.

12. Window (2) or door according to one of claims 1 to 11, **characterised in that** the air duct (13) extending from the second profile wall (20) to the first profile wall (7) is at least partially configured with an incline.

13. Window (2) or door according to one of claims 1 to 12, **characterised in that** at least one heating element is arranged in at least one of the air ducts (13, 18) and/or in at least one wall of the air ducts (13, 18).

14. Window (2) or door according to one of claims 1 to 13, **characterised in that** the air inlet openings (5) and/or the air outlet openings (11) are provided with a controllable closure element.

15. Window (2) or door according to one of claims 1 to 14, **characterised in that** the closure element is adjustable by motor operation.

16. Window (2) or door according to one of claims 1 to 15, **characterised in that** the air duct (13) or the air ducts (13, 18) has or have a cross-sectional surface or total cross-sectional surface of between 1 cm² and 15 cm², in particular between 3 cm² and 10 cm², preferably between 4 cm² and 5 cm², when the ventilation takes place by free convection, or the air duct (13) or the air ducts (13) has or have a cross-sectional surface of between 5 cm² and 50 cm², in particular between 10 cm² and 40 cm², preferably between 15 cm² and 20 cm², when the ventilation is fan-assisted.

17. Window (2) or door according to one of claims 1 to 16, **characterised in that** the fan unit (28) and/or the closure element is or are operatively connected to a humidity sensor.

18. Window (2) or door according to one of claims 1 to 17, **characterised in that** the air duct (13) or the air ducts (13, 18) are configured in a meandering manner.

19. Window (2) or door according to one of claims 1 to 18, **characterised in that** in the frame profile or the frame profiles (3) at least one outlet opening for a partial volumetric flow of the fresh air is arranged in a rebate (43) which is configured between the window frame (1) and the casement (15).

## Revendications

1. Fenêtre (2) ou porter comprenant un châssis dormant (1) et un châssis de battant (15), le châssis dormant (1) ou le châssis de battant (15) comprenant, pour l'introduction d'air frais, au moins une ouverture d'entrée d'air (5) dans une première surface externe (6) constituée d'une première paroi profilée (7) et au moins une ouverture de sortie d'air (11) dans une deuxième surface interne (9) constituée d'une deuxième paroi profilée (10), qui sont reliées en écoulement par au moins un canal de guidage d'air (13) dans le châssis dormant (1) ou dans le châssis de battant (15) et le châssis dormant (1) ou le châssis de battant (15) comprenant, pour l'évacuation de l'air ambiant, dans la deuxième paroi profilée (10), des ouvertures d'entrée d'air et, dans la première paroi profilée (7), des ouvertures de sortie d'air pour l'évacuation de l'air ambiant vers l'atmosphère environnante, qui sont reliées en écoulement par au moins un autre canal de guidage d'air (18) dans le châssis dormant (1) ou le châssis de battant (15), de façon à ce que, pour l'air entrant et l'air sortant, un canal de guidage d'air (13, 18) soit prévu, un tronçon du canal de guidage (13) étant réalisé immédiatement après la deuxième paroi profilée (10), ce tronçon présentant une longueur en direction de l'extension longitudinale (16) de la paroi profilée (10) qui représente au moins 10 % de la longueur de la deuxième paroi profilée (10) dans cette direction, **caractérisée en ce que**, dans la deuxième paroi profilée (10), se trouvent entre quatre et trente ouvertures de sortie d'air (11) pour l'air frais.

2. Fenêtre (2) ou porte selon la revendication 1, **caractérisée en ce que** dans le châssis dormant (1) et dans le châssis de battant (15) se trouvent au moins une ouverture d'entrée d'air (5), au moins une ouverture de sortie d'air (11) et au moins un canal de guidage d'air (13).

3. Fenêtre (2) ou porte selon la revendication 1 ou 2, **caractérisée en ce que** le châssis dormant (1) et/ou le châssis de battant (15) sont constitués d'un profilé à chambres creuses avec plusieurs chambres creuses (4).

4. Fenêtre (2) ou porte selon l'une des revendications 1 à 3, **caractérisée en ce que** plusieurs ouvertures d'entrée d'air (5) sont disposées, la somme des surfaces de section transversale de ces plusieurs ouvertures d'entrée d'air (5) représentant entre 1 cm² et 30 cm², plus particulièrement entre 3 cm² et 20 cm², de préférence 15 cm².

5. Fenêtre (2) ou porte selon l'une des revendications 1 à 4, **caractérisée en ce que** le châssis dormant (1) et le châssis de battant (15) sont constitués de plusieurs éléments profilés, les ouvertures d'entrée d'air (5) et/ou les ouvertures de sortie d'air (11) étant disposés dans au moins deux éléments profilés.

6. Fenêtre (2) ou porte selon l'une des revendications 1 à 5, **caractérisée en ce qu'**un autre canal de guidage d'air (18) est réalisé au moins partiellement directement dans le prolongement de la première paroi profilée (7) et partiellement au niveau d'au moins une ouverture de déshydratation (19) du châssis dormant (1) ou du châssis de battant (15).

7. Fenêtre (2) ou porte selon l'une des revendications 1 à 6, **caractérisée en ce qu'**une unité de ventilation (28) motorisée est reliée en écoulement avec le canal de guidage d'air (13) ou les canaux de guidage d'air (13, 18).

8. Fenêtre (2) ou porte selon la revendication 7, **caractérisée en ce que** l'unité de ventilation (28) est disposée au moins partiellement dans une feuillure entre le châssis de battant (15) et le châssis dormant (1).

9. Fenêtre (2) ou porte selon l'une des revendications 1 à 8, **caractérisée en ce que**, dans au moins un des canaux de guidage d'air (13, 18), se trouve au moins un échangeur thermique (29).

10. Fenêtre (2) ou porte selon la revendication 9, **caractérisée en ce que** l'au moins un échangeur thermique (29) est échangeur thermique à plaques.

11. Fenêtre (2) ou porte selon la revendication 9 ou 10, **caractérisée en ce que** l'au moins un échangeur thermique (29) comprend des parois d'échangeur thermique en matière plastique.

12. Fenêtre (2) ou porte selon l'une des revendications 1 à 11, **caractérisée en ce que** le canal de guidage d'air (13) s'étendant de la deuxième paroi profilée (20) vers la première paroi profilée (7) est réalisé au moins partiellement avec une déclivité.

13. Fenêtre (2) ou porte selon l'une des revendications 1 à 12, **caractérisée en ce que**, dans au moins un des canaux de guidage d'air (13, 18) et/ou au moins une paroi des canaux de guidage d'air (13, 18), se trouve au moins un élément chauffant.

14. Fenêtre (2) ou porte selon l'une des revendications 1 à 13, **caractérisée en ce que** les ouvertures d'entrée d'air (5) et/ou les ouvertures de sortie d'air (11) sont munies d'un élément de fermeture réglable.

15. Fenêtre (2) ou porte selon l'une des revendications 1 à 14, **caractérisée en ce que** l'élément de fermeture est réglable de manière motorisée.

16. Fenêtre (2) ou porte selon l'une des revendications 1 à 15, **caractérisée en ce que** le canal de guidage d'air (13) ou les canaux de guidage d'air (13, 18) présentent une surface de section transversale ou une surface de section transversale totale entre 1 cm² et 15 cm², plus particulièrement entre 3 cm² et 10 cm², de préférence entre 4 cm² et 5 cm², lorsque la ventilation a lieu par convection libre ou **en ce que** le canal de guidage d'air (13) ou les canaux de guidage d'air (13) présentent une surface de section transversale entre 5 cm² et 50 cm², plus particulièrement entre 10 cm² et 40 cm², de préférence entre 15 cm² et 20 cm², lorsque la ventilation a lieu à l'aide d'un ventilateur.

17. Fenêtre (2) ou porte selon l'une des revendications 1 à 16, **caractérisée en ce que** l'unité de ventilation (28) et/ou l'élément de fermeture sont reliés de manière fonctionnelle avec un capteur d'humidité.

18. Fenêtre (2) ou porte selon l'une des revendications 1 à 17, **caractérisée en ce que** le canal de guidage d'air (13) ou les canaux de guidage d'air (13, 18) sont réalisés en zigzag.

19. Fenêtre (2) ou porte selon l'une des revendications 1 à 18, **caractérisée en ce que** le ou les profilé(s) de châssis (3), se trouve au moins une ouverture de sortie, pour un débit volumique partiel de l'air frais vers une feuillure (43), qui est réalisée entre le châssis dormant (1) et le châssis de battant (15).
